# EUROPEAN PATENT APPLICATION

(11) **EP 3 282 684 A1**
(43) Date of publication of application: **14.02.2018**
(21) Application number: 16899089.3
(22) Date of filing: 06.06.2016
(51) Int. Cl.: H04N 5/222, F16M 3/00, F16M 11/20

(54) **PHOTOGRAPHING CAR, REMOTE CONTROL PHOTOGRAPHING CAR SYSTEM, AND PHOTOGRAPHING CONTROL METHOD FOR PHOTOGRAPHING CAR**

(30) Priority: 20.04.2016 CN 201610251693
(71) Applicant: Guangdong Sirui Optical Co., Ltd, Zhongshan, Guangdong 528458 (CN)
(72) Inventor: LI, Jie, Zhongshan Guangdong 528458 (CN); LAI, Runbo, Zhongshan Guangdong 528458 (CN); HE, Jiamin, Zhongshan Guangdong 528458 (CN)
(74) Representative: Lavoix
(86) International application number: PCT/CN2016/084887
(87) International publication number: WO 2017/181502

(57) **Abstract**

The present invention discloses a camera dolly, a remote-controlled camera dolly system, and a camera dolly photographing control method. The camera dolly comprises a vehicle body; at least one of a first photographic terminal and a second photographic terminal provided on the vehicle body and connected to the vehicle body by a data line which comprises data ports that matches different first photographic terminals and second photographic terminals. Thereby, the camera dolly is made adaptive to various types of photographic terminals in a large scope, so the compatibility of the camera dolly is improved.

## Description

### Technical Field

The present invention relates to the technical field of electronics, in particular relates to a camera dolly, a remote-controlled camera dolly system, and a camera dolly photographing control method.

### Background Technology

Mobile photographing is a development trend that is currently a hot topic, mobile photographing devices such as drones and camera dollies are in the ascendant.

Taking a camera dolly as an example, its vehicle body is provided with photographic terminals such as a camera and an intelligent terminal with photographing function (like a smartphone, a tablet computer such as iPad), for photographing while moving around. The camera dolly is provided with a control unit connected in a wireless manner or a wired manner to the photographic terminals for controlling them to perform photographing. As for a photographic terminal like a camera, it is rarely connected in a wireless manner, but is normally connected through a shutter release cable so as to be controlled according to a closed switch principle. As for an intelligent terminal, it can be connected in a wired manner as well as in a wireless manner (normally Bluetooth) so as to be controlled according to a waveform output control principle.

Since connection manners and control principles are different, the existing camera dollies normally can only be adaptive to a camera or can only be adaptive to an intelligent terminal, and cannot be adaptive to various types of photographic terminals in a large scope.

### Summary of the Invention

Therefore, the technical problem to be solved by the present invention is that the existing camera dollies cannot be adaptive to various types of photographic terminals in a large scope.

Accordingly, the embodiments of the present invention provide a camera dolly that comprises
a vehicle body;
at least one of a first photographic terminal and a second photographic terminal provided on the vehicle body and connected to the vehicle body by a data line which comprises data ports that matches different first photographic terminals and second photographic terminals.

Preferably, the data line is a data ribbon cable or a data bus.

Preferably, the first photographic terminal is a camera, and the second photographic terminal is an intelligent terminal with photographing function.

Preferably, the data line comprises four conducting lines, the first conducting line is adapted for transmitting signals adaptive to the intelligent terminal with photographing function, the second and third conducting lines are adapted for transmitting signals adaptive to the camera, the fourth conducting line is connected to the ground.

Preferably, the camera dolly further comprises a wheel group mounted on the vehicle body, the wheel group has three wheels comprising
a turning wheel provided on a front side or a rear side of the vehicle body;
a driving wheel and a driven wheel provided on the rear side or the front side of the vehicle body and disposed opposite the turning wheel, wherein, the driving wheel is rotated by a drive device, the driven wheel is mounted with a bearing, and an axle of the driven wheel extends through the bearing and is connected to the vehicle body such that the driven wheel is rotated by the driving wheel.

Preferably, the turning wheel is able to turn toward both sides of the vehicle body, over a range of 0-180°.

Preferably, the wheel group is arranged in an isosceles triangle shape along the forward-travel direction of the vehicle body.

Preferably, the camera dolly further comprises a drive device and a manipulator assembly, the drive device is coupled to the driving wheel by a clutch assembly;and the manipulator assembly is mounted inside the vehicle body, a manipulator portion at one end of the manipulator assembly is positioned outside a housing of the vehicle body, a fitting portion at the other end opposite the manipulator portion is fitted with the drive device, by manipulating the manipulator portion, the fitting portion is caused to drive the drive device to move, so as to cause the clutch assembly to be engaged or disengaged.

Preferably, the manipulator assembly comprises a knobbed screw rod, a rotary knob of the knobbed screw rod as the manipulator portion is positioned outside the housing of the vehicle body, a screw rod of the knobbed screw rod as the fitting portion is connected in a screw hole of the drive device, by rotating the rotary knob, the screw rod and the screw hole form a threaded fit to cause the drive device to move back and forth along an axial direction of the screw hole.

Preferably, the drive device comprises a motor and a motor bracket for mounting the motor, the motor bracket is provided with the screw hole at a position corresponding to the knobbed screw rod.

Preferably, a mounting chamber is formed inside the housing of the vehicle body, and the drive device is mounted in the mounting chamber; the housing of the vehicle body is provided with a through-hole at a position corresponding to the screw hole, the screw rod of the knobbed screw rod extends through the through-hole and is fitted with the screw hole of the motor bracket, the rotary knob of the knobbed screw rod is positioned outside the housing provided with the through-hole.

Preferably, the screw rod is provided with an annular groove, an axial retainer ring is mounted in the annular groove, the distance between the axial retainer ring and the rotary knob is larger than or equal to the bore depth of the through-hole, the outer diameter of the axial retainer ring is larger than the bore diameter of the through-hole.

Preferably, the motor is a stepper motor or a servo motor.

Preferably, the clutch assembly comprises a first gear connected coaxially to the driving wheel and a second gear connected coaxially to an output end of the drive device, the central axis of the first gear is parallel to the central axis of the second gear, and the first gear is able to engage with the second gear.

Preferably, the clutch assembly comprises a first gear connected coaxially to the driving wheel, a second gear connected coaxially to an output end of the drive device and at least one transition gear to be engaged between the first gear and the second gear.

Preferably, the at least one of a first photographic terminal and a second photographic terminal is detachably mounted on the vehicle body.

Preferably, a magnetic conducting structure is provided on an upper surface of the vehicle body, a magnetic bracket is stuck to the magnetic conducting structure by magnetic force, and the photographic terminal is mounted on the magnetic bracket.

Preferably, the magnetic bracket comprises a bracket body and a bracket base under the bracket body, the bracket base is installed with a magnet, and the bracket body is provided with a mounting structure for the photographic terminal; the upper surface of the vehicle body is made of a steel plate, and the magnetic bracket is stuck to the steel plate by means of the magnet.

Preferably, the camera dolly further comprises a power source device mounted inside the vehicle body, for supplying electrical power to the drive device.

Preferably, the power source device is a storage battery.

The embodiments of the present invention also provide a remote-controlled camera dolly system that comprises
a camera dolly according to any one of the aforementioned embodiments; and
a remote controller adapted for sending control signal to the camera dolly for controlling the vehicle body to move and/or controlling the photographic terminal to photograph.

The embodiments of the present invention also provide a camera dolly photographing control method, for controlling a camera dolly according to any one of the aforementioned embodiments, comprising
sending a first photographing instruction adaptive to the first photographic terminal to the first photographic terminal via the data line;
sending a second photographing instruction adaptive to the second photographic terminal to the second photographic terminal via the data line.

Preferably, the first photographing instruction and the second photographing instruction are sent simultaneously.

Preferably, the first photographing instruction comprises a plurality of photographing commands that match different first photographic terminals, and the second photographing instruction includes a plurality of photographing commands that match different second photographic terminals.

Preferably, the plurality of photographing commands adaptive to different first photographic terminals are sent sequentially, and the plurality of photographing commands adaptive to different second photographic terminals are sent sequentially.

In the camera dolly, the remote-controlled camera dolly system, and the camera dolly photographing control method of the embodiments of the present invention, different types of photographic terminals are connected to the vehicle body by a data line which comprises data ports that matches the different photographic terminals, thereby, the camera dolly is made adaptive to various types of photographic terminals in a large scope, so the compatibility of the camera dolly is improved.

### Brief Description of the Drawings

In order to more clearly describe the technical schemes in the specific embodiments of the present invention or in the prior art, hereinafter, the accompanying drawings required to be used in the description of the specific embodiments or the prior art will be briefly introduced. Apparently, the drawings described below are some particular embodiments of the present invention, for those skilled in the art, without expenditure of creative labor, other drawings can be derived on the basis of these accompanying drawings.
FIG. 1 is a structural schematic diagram of a 7-wire data line of a camera dolly of an embodiment of the present invention;
FIG. 2 is a schematic diagram of a 4-wire data line of a camera dolly of an embodiment of the present invention that connects photographic terminals to a MCU of the vehicle body;
FIG. 3 is a bottom view of a camera dolly of an embodiment of the present invention;
FIG. 4 is a stereogram of the camera dolly shown in FIG. 3;
FIG. 5 is a partial sectional view of the camera dolly shown in FIG. 3 at an electrically driving state;
FIG. 6 is a partial sectional view of the camera dolly shown in FIG. 3 at a manually driving state;
FIG. 7 is a top view of the camera dolly shown in FIG. 3;
FIG. 8 is a schematic diagram of a magnetic bracket of the camera dolly shown in FIG. 3 viewed from one angle thereof;
FIG. 9 is a schematic diagram of a magnetic bracket of the camera dolly shown in FIG. 3 viewed from another angle thereof.

### Detailed Description of Embodiments

A clear and complete description of the technical scheme of the present invention is given below, in conjunction with the accompanying drawings. Apparently, the described embodiments are a part, but not all, of the embodiments of the present invention. All the other embodiments, derived by those skilled in the art on the basis of the embodiments described in the present invention without expenditure of creative labor, are included in the protection scope of the present invention.

The technical scheme of the present invention is described in detail with reference to the accompanying drawings and specific embodiments.

The embodiments of the present invention provide a camera dolly that comprises a vehicle body; at least one of a first photographic terminal and a second photographic terminal provided on the vehicle body and connected to the vehicle body by a data line which comprises data ports that matches different first photographic terminals and second photographic terminals.

In the present application, the first photographic terminal for example may be a camera, such as a mechanical camera, a digital single-lens reflex camera, a digital mini-type single-lens reflex camera, an ordinary digital camera, etc. The second photographic terminal for example may be an intelligent terminal with photographing function, such as a smartphone, a tablet computer, etc.

Specifically, the first photographic terminal has a control principle which is different from that of the second photographic terminal, so that the signal adapted for controlling the first photographic terminal cannot control the second photographic terminal. For instance, the first photographic terminal is controlled according to a closed switch principle, while the second photographic terminal is controlled according to a waveform output control principle.

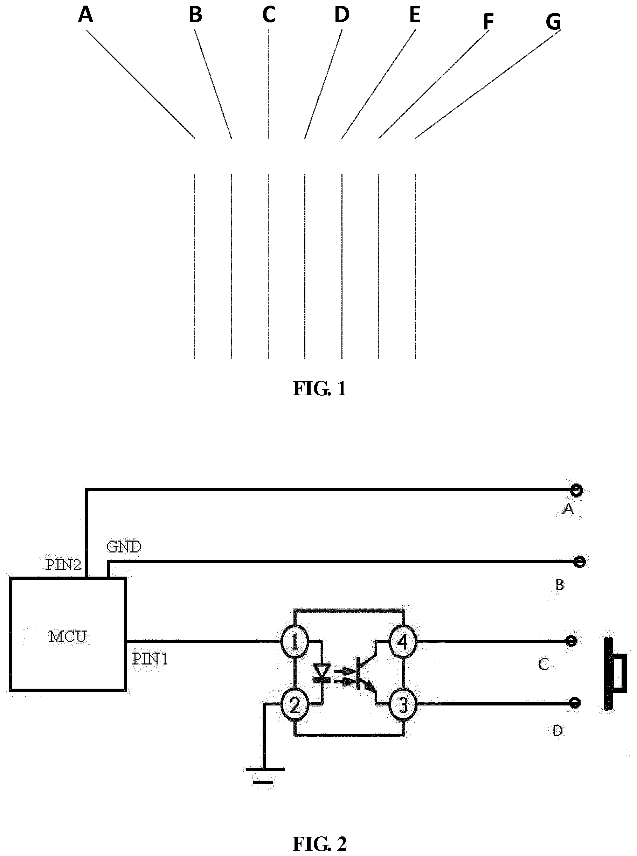

Specifically, the data line is a data ribbon cable or a data bus. As shown in FIG. 1, the data line may comprise conducting lines A-G. Herein, FIG. 1 is only an example and not intended for limiting the present invention in any way. Those skilled in the art should understand that, more conducting lines or less conducting lines may also be viable, and according to the photographic terminals that are required to be matched, the number of ports of the data line may be increased or reduced, or the ports can be redefined. For instance, the conducting line A may be adapted for matching an intelligent terminal that has Android operating system, the conducting line B may be adapted for matching an intelligent terminal that has iOS operating system, the conducting lines C and D form a closed circuit for matching a particular type of camera, the conducting lines E and F form a closed circuit for matching another type of camera, and the conducting line G is connected to the ground for improving the signal stability.

Hereinafter, a data line with 4 conducting lines is taken as an example for detailed description of an embodiment of the present invention.

As shown in FIG. 2, the conducting line A is adapted for transmitting signals adaptive to the intelligent terminal with photographing function, wherein, the conducting line A has one end connected to one output pin (PIN2) of a micro control unit (MCU) provided on the vehicle body of the camera dolly, and has another end connected to an earpiece hole on a smartphone. During operation, the output pin (PIN2) outputs a waveform control signal to the smartphone, so as to control the smartphone to photograph.

The conducting lines C and D are adapted for transmitting signals adaptive to the camera, wherein, the conducting lines C and D respectively have one end connected to one of the output ends ④ and ③ of an optical coupler, and respectively have another end connected to a port of a shutter release cable of the camera; one input end ① of the optical coupler is connected to another output pin (PIN1) of the MCU, and another input end ② of the optical coupler is connected to the ground. During operation, the output pin (PIN1) of the MCU for example can output a point type square wave control signal, the control signal renders the input ends ① and ② of the optical coupler to be connected, so as to render the output ends ③ and ④ to be connected, and with the electrical level of the square wave changing from a high level to a low level, the input ends ① and ② becomes disconnected, so as to render the output ends ③ and ④ to be disconnected, thereby controlling the camera to photograph.

The conducting line B is connected to a ground pin (GND) of the MCU, so as to provide stability for the signals.

Hence, in the camera dolly of the embodiments of the present invention, only two output pins (PIN1 and PIN2) of the MCU and a data line with 4 conducting lines are occupied, wherein the two output pins output control signals independently from each other, as a result, irrespective of whether the photographic terminal is a camera or a cell phone, the photographing can be carried out, without occupying the Bluetooth resource of the cell phone or interfering with the functions of the camera.

In order to increase the adaptability of the camera dolly of the embodiments of the present invention with respect to different photographic terminals, those skilled in the art can use more output pins of the micro control unit (MCU). In order to match a new type of intelligent terminal, an additional pin can adopt the connection manner of the conducting line A. In order to match a new type of camera, additional pins can adopt the connection manner of the conducting lines C and D. The ground line is common and does not need to occupy an additional pin. Thereby, the camera dolly is made adaptive to various types of photographic terminals in a large scope, so the compatibility of the camera dolly is improved. As for the existing micro control unit (MCU), its amount of pins is enough to be able to match all types of photographic terminals on the market.

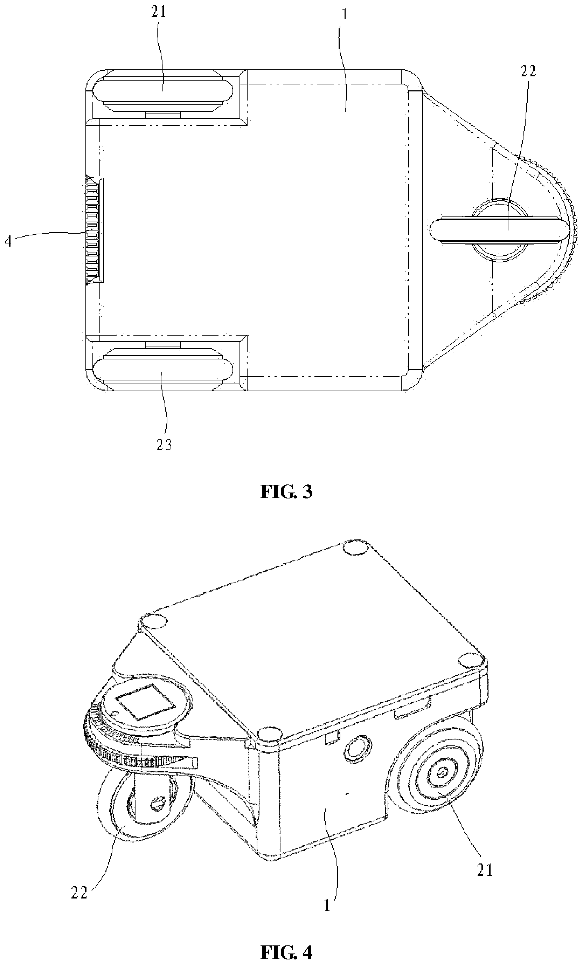

As shown in FIG. 3 to FIG. 9, a camera dolly of an embodiment of the present invention comprises a vehicle body 1, for mounting a photographic terminal 100; a wheel group mounted on the vehicle body 1; a drive device 3 mounted on the vehicle body 1, for driving the wheel group to rotate.

The wheel group has three wheels comprising a turning wheel 22 provided on a front side or a rear side of the vehicle body 1; a driving wheel 21 and a driven wheel 23 provided on the rear side or the front side of the vehicle body 1 and disposed opposite the turning wheel 22, wherein, the driving wheel 21 is rotated by the drive device 3, the driven wheel 23 is mounted with a bearing, and an axle of the driven wheel extends through the bearing and is connected to the vehicle body 1 such that the driven wheel 23 is rotated by the driving wheel 21.

In the camera dolly of this embodiment, the drive device 3 rotates the driving wheel 21 which in turn rotates the driven wheel 23, thereby causing the vehicle body 1 to move, and the turning wheel 22 controls the moving direction of the vehicle body during movement of the vehicle body 1. Such arrangement of the camera dolly movement has more steady motion as compared to the arrangement of driving by two wheels, which is beneficial for attaining better photographing effect with a simple structure and reduced cost; the camera dolly of this embodiment only requires one drive device 3 to carry out the camera dolly movement, which reduces power consumption.

Specifically, the turning wheel 22 is able to turn toward both sides of the vehicle body 1, over a range of 0-180°.

As a specific embodiment, the wheel group is arranged in an isosceles triangle shape along the forward-travel direction of the vehicle body 1. Wherein, the distance from the turning wheel 22 to the driving wheel 21 is equal to the distance from the turning wheel 22 to the driven wheel 23. Specifically, one situation may be that the turning wheel 22 is in the front, while the driving wheel 21 and the driven wheel 23 are in the back; another situation may be that the turning wheel 22 is in the back, while the driving wheel 21 and the driven wheel 23 are in the front. Such arrangement can ensure the steadiness of movement of the vehicle body 1.

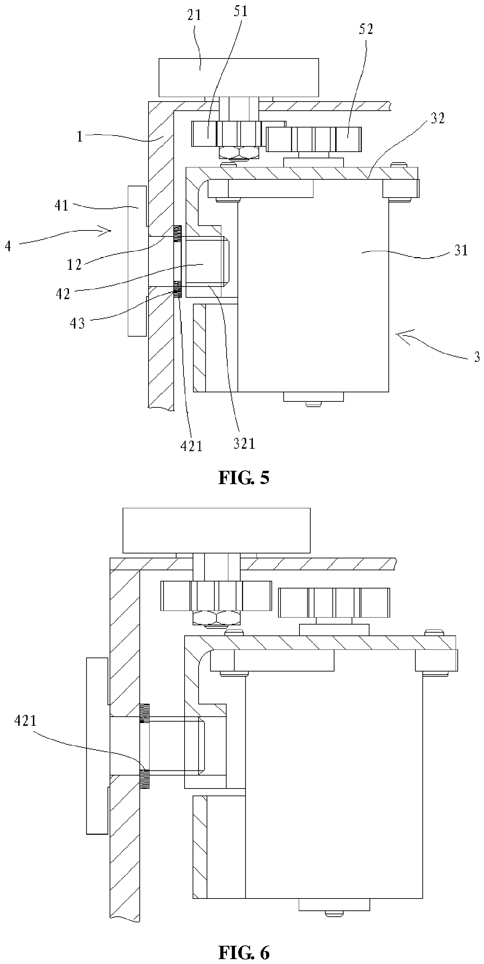

As a specific embodiment, as shown in FIG. 5 to FIG. 7, the drive device 3 is coupled to the driving wheel 21 by a clutch assembly; the camera dolly further comprises a manipulator assembly mounted on the vehicle body 1, a manipulator portion at one end of the manipulator assembly is positioned outside a housing of the vehicle body 1, a fitting portion at the other end opposite the manipulator portion is fitted with the drive device 3, by manipulating the manipulator portion, the fitting portion is caused to drive the drive device 3 to move, so as to cause the clutch assembly to be engaged or disengaged.

In the camera dolly of this embodiment, the manipulator portion is operated to control the clutch assembly to be engaged or disengaged, so as to control the driving wheel 21 to be or not to be electrically driven by the drive device 3, thereby switching between electrical driving and manual driving. When the motor malfunctions or become damaged, the manual driving mode can be switched to, for ensuring normal operation of the camera dolly. When human labor consumption needs to be reduced, the electrical driving mode can be switched to. The camera dolly of this embodiment is very convenient to use, and has a wide applying range.

The manipulator assembly may have various types of specific structure. In this embodiment, preferably, the manipulator assembly comprises a knobbed screw rod 4, a rotary knob 41 of the knobbed screw rod 4 as the manipulator portion is positioned outside the housing of the vehicle body 1, a screw rod 42 of the knobbed screw rod 4 as the fitting portion is connected in a screw hole 321 of the drive device 3. By rotating the rotary knob 41, the screw rod 42 and the screw hole 321 form a threaded fit to cause the drive device 3 to move back and forth along an axial direction of the screw hole 321.

The drive device 3 may have various specific forms. In this embodiment, preferably, the drive device 3 comprises a motor 31 and a motor bracket 32 for mounting the motor 31, the motor bracket 32 is provided with the screw hole 321 at a position corresponding to the knobbed screw rod 4.

As a specific embodiment, a mounting chamber 11 is formed inside the housing of the vehicle body 1, and the drive device 3 is mounted in the mounting chamber 11; the housing of the vehicle body 1 is provided with a through-hole 12 at a position corresponding to the screw hole 321, the screw rod 42 of the knobbed screw rod 4 extends through the through-hole 12 and is fitted with the screw hole 321 of the motor bracket 32, the rotary knob 41 of the knobbed screw rod 4 is positioned outside the housing provided with the through-hole 12.

As an improved embodiment, the screw rod 42 is provided with an annular groove 421, an axial retainer ring 43 is mounted in the annular groove 421, the distance between the axial retainer ring 43 and the rotary knob 41 is larger than or equal to the bore depth of the through-hole 12, the outer diameter of the axial retainer ring 43 is larger than the bore diameter of the through-hole 12. The axial retainer ring 43 cooperates with the rotary knob 41 to limit the axial movement of the knobbed screw rod 4, the knobbed screw rod 4 can only rotate, thereby preventing the knobbed screw rod 4 from slipping out of the housing of the vehicle body 1 and becoming lost.

Specifically, the motor 31 is a stepper motor or a servo motor.

As a specific embodiment, the clutch assembly comprises a first gear 51 connected coaxially to the driving wheel 21 and a second gear 52 connected coaxially to an output end of the drive device 3, the central axis of the first gear 51 is parallel to the central axis of the second gear 52, and the first gear 51 is able to engage with the second gear 52.

As an alternative embodiment, the clutch assembly comprises a first gear 51 connected coaxially to the driving wheel 21, a second gear 52 connected coaxially to an output end of the drive device 3 and at least one transition gear to be engaged between the first gear 51 and the second gear 52. For instance, a speed reduction gearbox comprising multiple transition gears can be engaged between the first gear 51 and the second gear 52.

As an improved embodiment, the photographic terminal 100 is detachably mounted on the vehicle body 1.

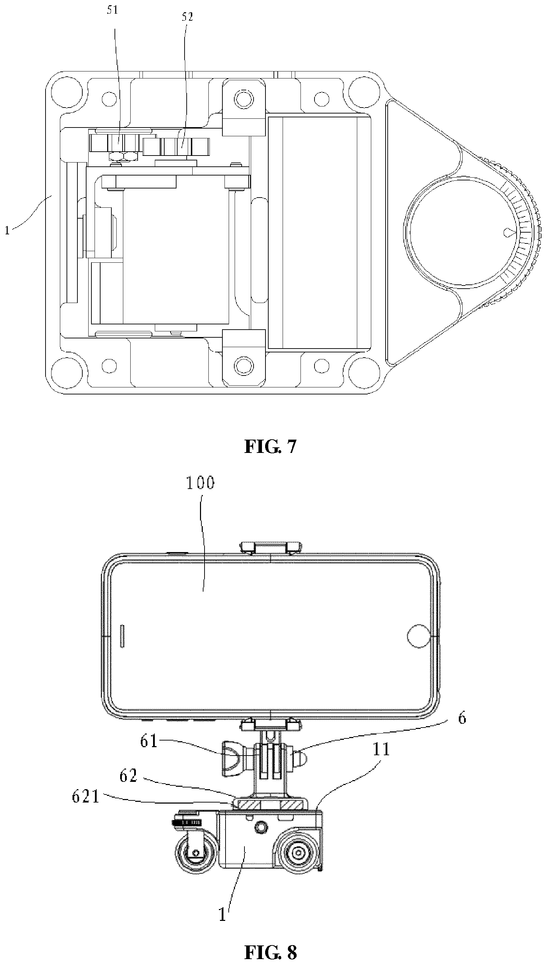

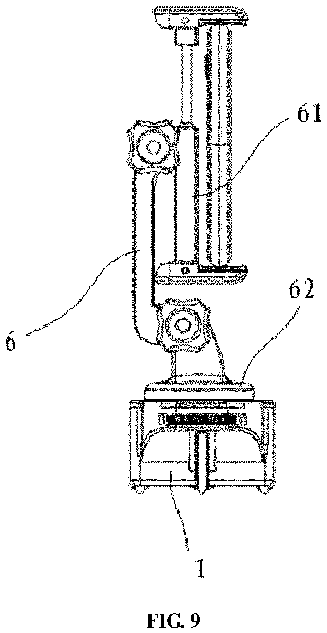

The photographic terminal 100 may have various mounting manners. In this embodiment, as shown in FIG. 8 and FIG. 9, preferably, a magnetic conducting structure is provided on an upper surface of the vehicle body, a magnetic bracket 6 is stuck to the magnetic conducting structure by magnetic force, and the photographic terminal 100 is mounted on the magnetic bracket 6. Because the photographic terminal 100 is mounted through the magnetic bracket 6, the mounting structure is compact, and it is convenient to remove the photographic terminal 100.

Specifically, the magnetic bracket 6 comprises a bracket body 61 and a bracket base 62 under the bracket body 61, the bracket base 62 is installed with a magnet 621, and the bracket body 61 is provided with a mounting structure for the photographic terminal 100; the upper surface of the vehicle body 1 is made of a steel plate 11, and the magnetic bracket 6 is stuck to the steel plate 11 by means of the magnet 621.

As an improved embodiment, the camera dolly of this embodiment further comprises a power source device mounted inside the vehicle body 1, for supplying electrical power to the drive device 3. The vehicle body 1 carries its own power source, so that the movement of the camera dolly is not limited and thus has a wider movement range.

As an improved embodiment, the power source device is a storage battery.

The embodiments of the present invention also provide a remote-controlled camera dolly system that comprises: a camera dolly according to any one of the aforementioned embodiments; and a remote controller adapted for sending control signal to the camera dolly for controlling the vehicle body to move and/or controlling the photographic terminal to photograph. Specifically, the remote controller is connected in a wireless manner or in a wired manner to the camera dolly. Preferably, the wireless connection manner uses a 2.4G wireless connection.

The embodiments of the present invention also provide a camera dolly photographing control method, for controlling a camera dolly according to any one of the aforementioned embodiments, comprising sending a first photographing instruction adaptive to the first photographic terminal to the first photographic terminal via the data line; sending a second photographing instruction adaptive to the second photographic terminal to the second photographic terminal via the data line.

Specifically, the first photographic terminal and the second photographic terminal are different types of photographic terminals, accordingly, the first photographing instruction and the second photographing instruction can be sent independently with respect to each other without interference toward each other.

The camera dolly photographing control method of the embodiments of the present invention sends photographing instructions respectively to different types of photographic terminals via the aforementioned data line, thereby the camera dolly is made adaptive to various types of photographic terminals in a large scope, so the compatibility of the camera dolly is improved.

Optionally, the first photographing instruction and the second photographing instruction are sent simultaneously. Thereby, there is no need to judge the specific type of the photographic terminal, an effective photographing instruction can be received so as to trigger a photographing operation, irrespective of whether the photographic terminal is a first type or a second type.

Preferably, the first photographing instruction comprises a plurality of photographing commands that match different first photographic terminals, and the second photographing instruction includes a plurality of photographing commands that match different second photographic terminals. Specifically, the plurality of photographing commands adaptive to different first photographic terminals are sent sequentially, and the plurality of photographing commands adaptive to different second photographic terminals are sent sequentially. Thereby, in order to achieve photographing control of a particular photographic terminal, it only needs one command among the multiple photographing commands to play its function, so the compatibility of the system is improved.

Apparently, the aforementioned embodiments are merely examples illustrated for clearly describing the present application, rather than limiting the embodiments thereof. For those skilled in the art, various changes and modifications in other different forms can be made on the basis of the aforementioned description. It is unnecessary and impossible to exhaustively list all the embodiments herein. However, any obvious changes or modifications derived from the aforementioned description are intended to be embraced within the protection scope of the present invention application.

## Claims

1. A camera dolly, **characterized in** comprising:
a vehicle body;
at least one of a first photographic terminal and a second photographic terminal provided on the vehicle body;
a data line, by which the at least one of a first photographic terminal and a second photographic terminal is connected to the vehicle body, the data line comprising data ports that matches different first photographic terminals and second photographic terminals.

2. The camera dolly according to Claim 1, **characterized in that**, the data line is a data ribbon cable or a data bus.

3. The camera dolly according to Claim 1, **characterized in that**, the first photographic terminal is a camera, and the second photographic terminal is an intelligent terminal with photographing function.

4. The camera dolly according to Claim 3, **characterized in that**, the data line comprises four conducting lines, the first conducting line is adapted for transmitting signals adaptive to the intelligent terminal with photographing function, the second and third conducting lines are adapted for transmitting signals adaptive to the camera, the fourth conducting line is connected to the ground.

5. The camera dolly according to any one of Claims 1-4, **characterized in** further comprising a wheel group mounted on the vehicle body, the wheel group has three wheels comprising
a turning wheel provided on a front side or a rear side of the vehicle body;
a driving wheel and a driven wheel provided on the rear side or the front side of the vehicle body and disposed opposite the turning wheel, wherein, the driving wheel is rotated by a drive device, the driven wheel is mounted with a bearing, and an axle of the driven wheel extends through the bearing and is connected to the vehicle body such that the driven wheel is rotated by the driving wheel.

6. The camera dolly according to Claim 5, **characterized in that**, the turning wheel is able to turn toward both sides of the vehicle body, over a range of 0-180°.

7. The camera dolly according to Claim 5, **characterized in that**, the wheel group is arranged in an isosceles triangle shape along the forward-travel direction of the vehicle body.

8. The camera dolly according to Claim 5, **characterized in** further comprising a drive device and a manipulator assembly,
the drive device is coupled to the driving wheel by a clutch assembly;
the manipulator assembly is mounted inside the vehicle body, a manipulator portion at one end of the manipulator assembly is positioned outside a housing of the vehicle body, a fitting portion at the other end opposite the manipulator portion is fitted with the drive device, by manipulating the manipulator portion, the fitting portion is caused to drive the drive device to move, so as to cause the clutch assembly to be engaged or disengaged.

9. The camera dolly according to Claim 5, **characterized in that**, the manipulator assembly comprises a knobbed screw rod, a rotary knob of the knobbed screw rod as the manipulator portion is positioned outside the housing of the vehicle body, a screw rod of the knobbed screw rod as the fitting portion is connected in a screw hole of the drive device, by rotating the rotary knob, the screw rod and the screw hole form a threaded fit to cause the drive device to move back and forth along an axial direction of the screw hole.

10. The camera dolly according to Claim 9, **characterized in that**, the drive device comprises a motor and a motor bracket for mounting the motor, the motor bracket is provided with the screw hole at a position corresponding to the knobbed screw rod.

11. The camera dolly according to Claim 10, **characterized in that**, a mounting chamber is formed inside the housing of the vehicle body, and the drive device is mounted in the mounting chamber; the housing of the vehicle body is provided with a through-hole at a position corresponding to the screw hole, the screw rod of the knobbed screw rod extends through the through-hole and is fitted with the screw hole of the motor bracket, the rotary knob of the knobbed screw rod is positioned outside the housing provided with the through-hole.

12. The camera dolly according to Claim 11, **characterized in that**, the screw rod is provided with an annular groove, an axial retainer ring is mounted in the annular groove, the distance between the axial retainer ring and the rotary knob is larger than or equal to the bore depth of the through-hole, the outer diameter of the axial retainer ring is larger than the bore diameter of the through-hole.

13. The camera dolly according to Claim 10, **characterized in that**, the motor is a stepper motor or a servo motor.

14. The camera dolly according to any one of Claims 8-13, **characterized in that**, the clutch assembly comprises a first gear connected coaxially to the driving wheel and a second gear connected coaxially to an output end of the drive device, the central axis of the first gear is parallel to the central axis of the second gear, and the first gear is able to engage with the second gear.

15. The camera dolly according to any one of Claims 8-13, **characterized in that**, the clutch assembly comprises a first gear connected coaxially to the driving wheel, a second gear connected coaxially to an output end of the drive device and at least one transition gear to be engaged between the first gear and the second gear.

16. The camera dolly according to any one of Claims 5-13, **characterized in that**, the at least one of a first photographic terminal and a second photographic terminal is detachably mounted on the vehicle body.

17. The camera dolly according to Claim 16, **characterized in that**, a magnetic conducting structure is provided on an upper surface of the vehicle body, a magnetic bracket is stuck to the magnetic conducting structure by magnetic force, and the photographic terminal is mounted on the magnetic bracket.

18. The camera dolly according to Claim 17, **characterized in that**, the magnetic bracket comprises a bracket body and a bracket base under the bracket body, the bracket base is installed with a magnet, and the bracket body is provided with a mounting structure for the photographic terminal; the upper surface of the vehicle body is made of a steel plate, and the magnetic bracket is stuck to the steel plate by means of the magnet.

19. The camera dolly according to any one of Claims 5-13, **characterized in** further comprising a power source device, mounted inside the vehicle body, for supplying electrical power to the drive device.

20. The camera dolly according to Claim 19, **characterized in that**, the power source device is a storage battery.

21. A remote-controlled camera dolly system, **characterized in** comprising:
a camera dolly according to any one of Claims 1-20; and
a remote controller adapted for sending control signal to the camera dolly for controlling the vehicle body to move and/or controlling the photographic terminal to photograph.

22. A camera dolly photographing control method, for controlling a camera dolly according to any one of Claims 1-20, **characterized in** comprising:
sending a first photographing instruction adaptive to the first photographic terminal to the first photographic terminal via the data line;
sending a second photographing instruction adaptive to the second photographic terminal to the second photographic terminal via the data line.

23. The control method according to Claim 22, **characterized in that**, the first photographing instruction and the second photographing instruction are sent simultaneously.

24. The control method according to Claim 22 or 23, **characterized in that**, the first photographing instruction comprises a plurality of photographing commands that match different first photographic terminals, and the second photographing instruction includes a plurality of photographing commands that match different second photographic terminals.

25. The control method according to Claim 24, **characterized in that**, the plurality of photographing commands adaptive to different first photographic terminals are sent sequentially, and the plurality of photographing commands adaptive to different second photographic terminals are sent sequentially.
